# EUROPEAN PATENT APPLICATION

(11) **EP 3 276 604 A1**
(43) Date of publication of application: **31.01.2018**
(21) Application number: 17182386.7
(22) Date of filing: 20.07.2017
(51) Int. Cl.: G09G 3/34, G09G 3/36

(54) **METHOD AND DEVICE FOR ADJUSTING REFRESH RATE**

(30) Priority: 29.07.2016 CN 201610619168
(71) Applicant: Beijing Xiaomi Mobile Software Co., Ltd., Beijing 100085 (CN)
(72) Inventor: LI, Guosheng, Haidian District, Beijing 100085 (CN); YANG, Xiaoxing, Haidian District, Beijing 100085 (CN); DAI, Lin, Haidian District, Beijing 100085 (CN)
(74) Representative: Steinbauer, Florian

(57) **Abstract**

The present invention relates to a method and device for adjusting refresh rate and belongs to a technical field of computer. The method include: detecting (101, 201) whether an image currently displayed on a screen is a static image which remains unchanged during a predetermined period of time; obtaining (102, 202) backlight intensity of the screen when the image currently displayed on the screen is the static image; and reducing (103, 204) a current first refresh rate of the screen to a second refresh rate based on the backlight intensity, the second refresh rate is lower than a third refresh rate obtained by adjusting the refresh rate of the screen based on dynamic frame rate technology.

## Description

### FIELD

The present invention relates to a technical field of computer, and more particularly, to a method and device for adjusting refresh rate.

### BACKGROUND

People may enrich their spare time by various applications, for example, users may watch a video with a player, and read a book with a reader and the like. The screen of a terminal is required to have a higher refresh rate for playing video but not for reading books, so the terminal should adjust the refresh rate of its screen. The terminal may read a preset first refresh rate and reduce a current second refresh rate to the first refresh rate.

### SUMMARY

A method and device for adjusting refresh rate are provided by the present invention to overcome an existing problem in the related art.

According to a first aspect of embodiments of the present invention, a method for adjusting refresh rate is provided, the method includes: detecting whether an image currently displayed on a screen is a static image which remains unchanged during a predetermined period of time; obtaining backlight intensity of the screen when the image currently displayed on the screen is the static image; and reducing a current first refresh rate of the screen to a second refresh rate based on the backlight intensity, the second refresh rate is lower than a third refresh rate obtained by adjusting the refresh rate of the screen based on dynamic frame rate technology.

Advantageously, reducing the current first refresh rate of the screen to the second refresh rate based on the backlight intensity includes: determining the second refresh rate corresponding to the backlight intensity, wherein the second refresh rate is positively correlated with the backlight intensity; and reducing the current first refresh rate of the screen to the second refresh rate.

Advantageously, determining the second refresh rate corresponding to the backlight intensity includes: looking up a backlight current corresponding to the backlight intensity in a first correspondence used to record a relationship between different backlight intensities and different backlight currents; and looking up the second refresh rate corresponding to the backlight current in a second correspondence used to record a relationship between different backlight currents and different second refresh rates.

Advantageously, reducing the current first refresh rate of the screen to the second refresh rate includes: determining a first transmission rate based on the second refresh rate and adjusting a current second transmission rate to the first transmission rate, wherein the first transmission rate is a data transmission rate of the static image and is lower than the second transmission rate; or transmitting data with the current second transmission rate, the data comprises at least two sets of valid data between which at least one set of invalid data is inserted, the valid data is data of the static image and the invalid data is not displayed on the screen; wherein the second transmission rate corresponds to the first refresh rate.

Advantageously, the third refresh rate is the first refresh rate, the method further includes: determining the first refresh rate corresponding to the static image based on the dynamic frame rate technology when the image currently displayed on the screen is the static image; and reducing a current fourth refresh rate of the screen to the first refresh rate.

Advantageously, the method further includes: increasing the second refresh rate to the fourth refresh rate when the image currently displayed on the screen is changed.

According to a second aspect of embodiments of the present invention, a device for adjusting refresh rate is provided, the device includes: an image detection module configured to detect whether an image currently displayed on a screen is a static image which remains unchanged during a predetermined period of time; an intensity obtaining module configured to obtain backlight intensity of the screen when a detection result of the image detection module is that the image currently displayed on the screen is the static image; and a first adjustment module configured to reduce a current first refresh rate of the screen to a second refresh rate based on the backlight intensity obtained by the intensity obtaining module, the second refresh rate is lower than a third refresh rate obtained by adjusting the refresh rate of the screen based on dynamic frame rate technology.

Advantageously, the first adjustment module includes: a refresh rate determination sub-module configured to determine the second refresh rate corresponding to the backlight intensity, wherein the second refresh rate is positively correlated with the backlight intensity; and a refresh rate adjustment sub-module configured to reduce the current first refresh rate of the screen to the second refresh rate determined by the refresh rate determination sub-module.

Advantageously, the refresh determination sub-module is further configured to: look up a backlight current corresponding to the backlight intensity in a first correspondence used to record a relationship between different backlight intensities and different backlight currents; and look up the second refresh rate corresponding to the backlight current in a second correspondence used to record a relationship between different backlight currents and different second refresh rates.

Advantageously, the refresh adjustment sub-module is further configured to: determine a first transmission rate based on the second refresh rate and adjusting a current second transmission rate to the first transmission rate, wherein the first transmission rate is a data transmission rate of the static image and is lower than the second transmission rate; or transmit data with the current second transmission rate, the data comprises at least two sets of valid data between which at least one set of invalid data is inserted, the valid data is data of the static image, and the invalid data is not displayed on the screen; wherein the second transmission rate corresponds to the first refresh rate.

Advantageously, the third refresh rate is the first refresh rate, the device further includes: a refresh rate determination module configured to determine the first refresh rate corresponding to the static image based on the dynamic frame rate technology when the image currently displayed on the screen is the static image; and a second adjustment module configured to reduce a current fourth refresh rate of the screen to the first refresh rate determined by the refresh rate determination module.

Advantageously, the device further includes: a third adjustment module configured to increase the second refresh rate to the fourth refresh rate when the image currently displayed on the screen is changed.

According to a third aspect of embodiments of the present invention, a device for adjusting refresh rate is provided, the device includes: a processor; and a memory for storing instructions executable by the processor; wherein the processor is configured to perform any method according to the invention.

Embodiments of the present invention may provide at least some of the following beneficial effects.

The present invention may solve the problem that a screen has a higher power consumption due to a higher refresh rate set for it according to the dynamic frame rate technology when the screen displays a static image, and achieve the effect of saving power consumption, by detecting whether the image currently displayed on the screen is a static image, and reducing the current first refresh rate of the screen to a second refresh rate based on backlight intensity when the image currently displayed on the screen is a static image, to reduce the refresh rate of the screen when a static image is displayed, wherein the second refresh rate is lower than the first refresh rate and the third refresh rate which is a refresh rate obtained by adjusting the refresh rate of the screen based on dynamic frame rate technology. In addition, due to the backlight intensity is related with the dimming speed of the screen, so the second refresh rate determined based on the backlight intensity wouldn't cause screen flicker, which may solve the problem of screen flicker due to the second refresh rate not suitable for the current backlight intensity of the screen when a same refresh rate is set for the screen with different backlight intensities.

When the image currently displayed by the terminal is changed, by increasing the second refresh rate to the fourth refresh rate, the invention may solve the following problem and improve the display effect of the screen: when the second refresh rate is used to display a varying image and the refresh rate is lower than the change rate of the image, the screen cannot display the whole image which causes incomplete display of the image.

It is to be understood that the above general description and the following detailed description are merely for the purpose of illustration and explanation, and are not intended to limit the scope of the protection of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for adjusting refresh rate according to an exemplary embodiment;
Fig. 2 is a flow diagram illustrating a method for adjusting refresh rate according to another exemplary embodiment;
Fig. 3 is a block diagram illustrating a device for adjusting refresh rate according to an exemplary embodiment;
Fig. 4 is a block diagram illustrating a device for adjusting refresh rate according to an exemplary embodiment;
Fig. 5 is a block diagram illustrating a device used for adjusting refresh rate according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present invention. Instead, they are merely examples of devices and methods consistent with aspects related to the present invention as recited in the appended claims.

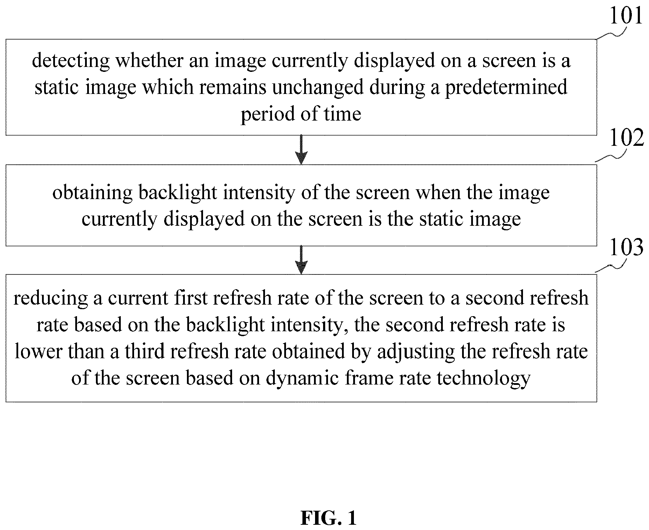

Fig. 1 is a flow diagram illustrating a method for adjusting refresh rate according to an exemplary embodiment. The method for adjusting refresh rate may be applied to a terminal, and as shown in Fig. 1, the method may include the following steps.

In step 101, whether an image currently displayed on a screen is a static image is detected, wherein a static image is an image remains unchanged during a predetermined period of time.

In step 102, the backlight intensity of the screen is obtained when the image currently displayed on the screen is the static image.

In step 103, a current first refresh rate of the screen is reduced to a second refresh rate based on the backlight intensity, the second refresh rate is lower than a third refresh rate obtained by adjusting the refresh rate of the screen based on dynamic frame rate technology.

The method for adjusting refresh rate provided by the present invention may solve the problem that the screen has a higher power consumption due to a higher refresh rate set for it according to the dynamic frame rate technology when the screen displays a static image, and achieve the effect of saving power consumption, by detecting whether the image currently displayed on the screen is a static image, and reducing the current first refresh rate of the screen to a second refresh rate based on backlight intensity when the image currently displayed on the screen is a static image, to reduce the refresh rate of the screen when a static image is displayed, wherein the second refresh rate is lower than the first refresh rate and the third refresh rate which is a refresh rate obtained by adjusting the refresh rate of the screen based on dynamic frame rate technology,. In addition, due to the backlight intensity is related with the dimming speed of the screen, so the second refresh rate determined based on the backlight intensity wouldn't cause screen flicker, which may solve the problem of screen flicker due to the second refresh rate not suitable for the current backlight intensity of the screen when a same refresh rate is set for the screen with different backlight intensities.

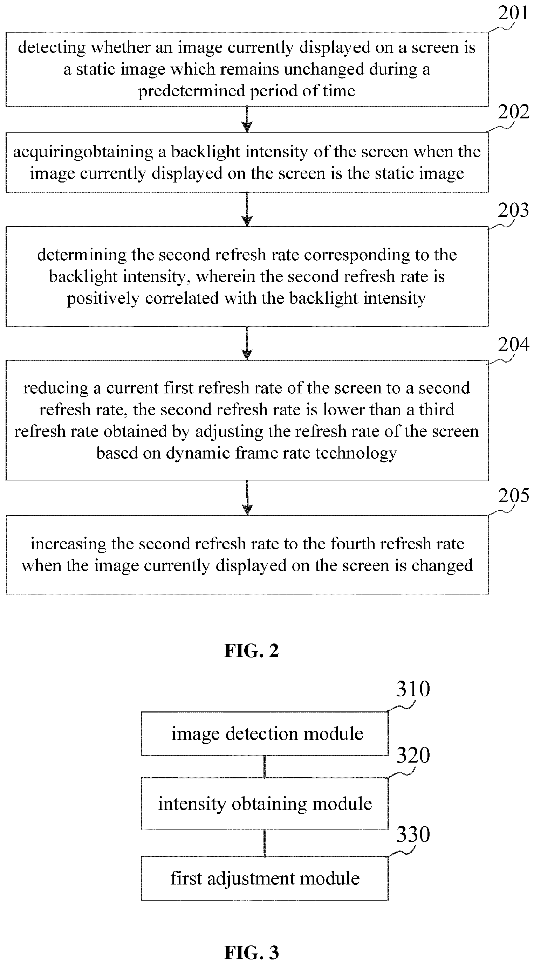

Fig. 2 is a flow diagram illustrating a method for adjusting refresh rate according to another exemplary embodiment. The method for adjusting refresh rate may be applied to a terminal, and as shown in Fig. 2, the method may include the following steps.

In step 201, whether an image currently displayed on a screen is a static image is detected, the static image is an image which remains unchanged during a predetermined period of time.

Each image displayed on the screen is an image frame and each image corresponds to one set of valid data, wherein the valid data is cached in a display buffer, and in the embodiment, the valid data cached in the display buffer is refreshed in a preset refresh rate, That is, the valid data displayed by the screen is refreshed to a same or different set of valid data periodically. The refresh rate is also known as frame rate which refers to the frequency of refreshing image frame.

In the embodiment, there are two kinds of terminal screen, the first screen is a video panel which is not arranged with Random-access Memory (RAM), and the second screen is a command panel which is arranged with a RAM. When the terminal has the first screen, the Application Processor (AP) of the terminal sends the valid data to the screen at a refresh frequency, and the screen caches the valid data in the display buffer and displays the valid data. When the AP sends same valid data twice, the screen refreshes the valid data cached in the display buffer to the next same set of valid data. When the terminal has the second screen, the AP of the terminal sends the valid data to the screen, and the screen caches the received valid data in the display buffer and displays the valid data. When the valid data has no change, the screen refreshes the valid data cached in the display buffer to the next same set of valid data regularly.

Each image frame displayed on the screen corresponds to a set of valid data, so detecting whether the image currently displayed on the screen is a static image is to detect whether the valid data received in a predetermined period of time is changed or not. When the valid data received in the predetermined period of time is not changed, it indicates that the valid data received in the predetermined period of time is same, and the valid data displayed after the refresh and the valid data displayed before the refresh are the same, so the terminal may reduce the refresh rate of the terminal, so as to save the power consumption for memory access, the power consumption for data transmission and the power consumption for refresh.

In the embodiment, the static image may be generated in the following two scenarios. In the first scenario, the terminal is switched from a dynamic scene to a static scene, for example, the screen plays video at first, and then displays a static image when the user triggers a control key for play pause. In the second scenario, the terminal is in a static situation, for example, the user reads e-books, browses a webpage and the like, at the moment, the image displayed on the screen is a static image.

When reducing the refresh rate of the screen, the terminal reduces the refresh rate of the screen using the dynamic frame rate technology. In the embodiment, the method may further include: determining the first refresh rate corresponding to the static image based on the dynamic frame rate technology when the image currently displayed on the screen is the static image; and reducing a current fourth refresh rate of the screen to the first refresh rate.

The fourth refresh rate is the original refresh rate of the screen, for example, the fourth refresh rate is the refresh rate of factory setting. In general, the fourth refresh rates of most screens are 60Hz.

The dynamic frame rate technology is the technology used to reduce the refresh rate of the screen when the screen displays a static image. In generally, the dynamic frame rate technology is used to set a same first refresh rate for all screens. If the first refresh rate is set to be too low, the screen may be caused flickering due to the dimming speed of the screen being positively correlated with a leak current, that is, the more the leak current is, the larger the dimming speed of the screen is; and the less the leak current is, the smaller the dimming speed of the screen. For easy understanding, a first screen and a second screen are taken as an example. Assumed that the leak current of the first screen is larger than that of the second screen, and the first and second screens have a same brightness after refresh and a same refresh rate. If the first screen and the second screen refresh a first set of valid data at the same time, and before refreshing the second set of valid data, the brightness of the first screen is smaller than that of the second screen; after refreshing the second set of valid data, the first and second screens has the same brightness, so the brightness change of the first screen before and after refresh is larger than that of the second screen, so the first screen are easy to flicker.

The refresh rate of a screen set based on the dynamic frame rate technology being too low would cause the screen flicker, so a relative high refresh rate is set for the screen based on the dynamic frame rate technology generally. For example, if the third refresh rate is 50Hz, the refresh rate of the terminal would be reduced from 60Hz to 50Hz, that is, the terminal changes to display 50 image frames per second from 60 image frames per second.

If the first refresh rate is set to be too high, the terminal cannot save the power consumption for memory access, the power consumption for data transmission and the power consumption for screen refresh to the greatest extent, then step 202 may be performed.

In step 202, the backlight intensity of the screen is obtained when the image currently displayed on the screen is the static image.

The backlight intensity is the illumination intensity of the backlights on the screen.

In the embodiment, the illumination of the backlights on the screen may cause electronic migration which may generate a current and cause a large leak current of the screen. In other words, the higher the backlight intensity is, the larger the leak current is; and the lower the backlight intensity is, the smaller the leak current is.

In order to ensure the screen not flicker before and after refresh, the terminal is required to set a higher refresh rate for the screen having a large leak current, and set a lower refresh rate for the screen having a small leak current. In other words, the terminal is required to set a higher refresh rate for the screen having high backlight intensity and set a lower refresh rate for the screen having low backlight intensity, the backlight intensity is positively correlated with the refresh rate.

In step 203, the second refresh rate corresponding to the backlight intensity is determined, wherein the second refresh rate is positively correlated with the backlight intensity.

After obtaining the backlight intensity, the terminal may convert the backlight intensity to a backlight current, and then determine the second refresh rate based on the backlight current. Determining the second refresh rate corresponding to the backlight intensity comprises: looking up a backlight current corresponding to the backlight intensity in a first correspondence used to record a relationship between different backlight intensities and different backlight currents; and looking up the second refresh rate corresponding to the backlight current in a second correspondence used to record a relationship between different backlight currents and different second refresh rates.

The first correspondence and the second correspondence can be determined based on a preset algorithm, or based on a great deal of experiments, which is not limited herein.

In one possible implementation, the second correspondence is as follow: 20mA-50Hz, 10mA-40Hz, 5mA-30Hz, 2mA-20Hz.

When implemented, the second refresh rate makes the flicker value less than -30dB, the flicker value less than -30 dB may ensure the screen not flickering, so as to ensure the display quality of the image frame.

In step 204, the current first refresh rate of the screen is reduced to the second refresh rate, wherein the second refresh rate is lower than the third refresh rate obtained by adjusting the refresh rate of the screen based on dynamic frame rate technology.

In the embodiment, the first refresh rate may be the refresh rate obtained by adjusting the refresh rate of the screen based on dynamic frame rate technology, that is, the first refresh rate is the third refresh rate; or the first refresh rate may be the original refresh rate, that is, the first refresh rate is the fourth refresh rate.

Two implementations for adjusting refresh rate are provided in the embodiment, which will be introduced in the following separately.

In the first implementation, a first transmission rate is determined based on the second refresh rate and the current second transmission rate is adjusted to the first transmission rate, wherein the first transmission rate is the data transmission rate of the static image and is lower than the second transmission rate, and the second transmission rate corresponds to the first refresh rate.

The screen will display a set of valid data after receiving the complete set of valid data, so the refresh rate may be reduced by reducing the data transmission rate. For example, the current refresh rate is 60Hz which corresponds to a data transmission rate of a Kb/s, and if the matched refresh rate is 30Hz, the data transmission rate corresponding to the 30Hz is a/2 Kb/s.

In the second implementation, data is transmitted with the current second transmission rate, the data comprises at least two sets of valid data between which at least one set of invalid data is inserted, the valid data is the data of the static image and the invalid data is not displayed on the screen, and the second transmission rate corresponds to the first refresh rate.

The screen refreshes the valid data currently displayed with the received valid data, so the invalid data may be inserted between the valid data. When the invalid data is received by the terminal, the terminal would not refresh the valid refresh data with the invalid refresh data, so as to reduce the refresh rate.

The number of the inserted invalid data relates to the second refresh rate and the first refresh rate. For example, if the current first refresh rate is 60Hz, 60 sets of valid data are required to be transmitted in 1 second; if the second refresh rate is 30Hz, 30 sets of valid data are required to be transmitted in 1 second, and 30 sets of invalid data may be inserted in the 1 second; and if the second refresh rate is 50Hz, 50 sets of valid data are required to be transmitted in 1 second, and 10 sets of invalid data may be inserted in the 1 second.

It should be noted that the terminal may evenly insert the invalid data between the valid data. For example, if 30 sets of valid data and 30 sets of invalid data are required to be transmitted in 1 second, one set of invalid data may be inserted every two sets of valid data; if 50 sets of valid data and 10 sets of invalid data are required to be transmitted in 1 second, one set of invalid data may be inserted every five sets of valid data. The invalid data may be inserted in other ways, which is not limited herein.

In the embodiment, the idle time between transmissions of two valid data is known as porch, so the second implementation is to increase the porch value.

In step 205, the second refresh rate is increased to the fourth refresh rate when the image currently displayed by the terminal is changed.

When the image currently displayed is changed, the terminal is required to increase the current second refresh rate to the fourth refresh rate of the screen.

When the first refresh rate is the fourth refresh rate, the terminal is required to increase the second refresh rate to the first refresh rate. The process of reducing the second refresh rate to the first refresh rate by the terminal is opposite to the process of increasing the first refresh rate to the second refresh rate by the terminal. For example, the terminal adjusts the first transmission rate to the second transmission rate, or data may be transmitted with the second transmission rate, and the data only include the valid data, which is not limited herein.

When the third refresh rate is the first refresh rate, the terminal is required to increase the second refresh rate to the fourth refresh rate. For example, the terminal adjusts the first transmission rate to the third transmission rate corresponding to the fourth refresh rate, or data may be transmitted with the third transmission rate and the data only include the valid data, at the moment, the third transmission rate is higher than the second transmission rate.

The method for adjusting refresh rate provided by the present invention may solve the problem that a screen has a higher power consumption due to a higher refresh rate set for it according to the dynamic frame rate technology when the screen displays a static image, and achieve the effect of saving power consumption, by detecting whether the image currently displayed on the screen is a static image, and reducing the current first refresh rate of the screen to a second refresh rate based on backlight intensity when the image currently displayed on the screen is a static image, to reduce the refresh rate of the screen when a static image is displayed, wherein the second refresh rate is lower than the first refresh rate and the third refresh rate which is a refresh rate obtained by adjusting the refresh rate of the screen based on dynamic frame rate technology,. In addition, due to the backlight intensity is related with the dimming speed of the screen, so the second refresh rate determined based on the backlight intensity wouldn't cause screen flicker, which may solve the problem of screen flicker due to the second refresh rate not suitable for the current backlight intensity of the screen when a same refresh rate is set for the screen with different backlight intensities.

When the image currently displayed by the terminal is changed, by increasing the second refresh rate to the fourth refresh rate, the invention may solve the following problem and improve the display effect of the screen: when the second refresh rate is used to display a varying image and the refresh rate is lower than the change rate of the image, the screen cannot display the whole image which causes incomplete display of the image.

Fig. 3 is a block diagram illustrating a device for adjusting refresh rate according to an exemplary embodiment. The device for adjusting refresh rate may be applied to a terminal, as shown in Fig. 3, the device may include: an image detection module 310, an intensity obtaining module 320, and a first adjustment module 330.

The image detection module 310 is configured to detect whether an image currently displayed on a screen is a static image which remains unchanged during a predetermined period of time.

The intensity obtaining module 320 is configured to obtain backlight intensity of the screen when the image currently displayed on the screen is the static image.

The first adjustment module 330 is configured to reduce a current first refresh rate of the screen to a second refresh rate based on the backlight intensity, the second refresh rate is lower than a third refresh rate obtained by adjusting the refresh rate of the screen based on dynamic frame rate technology.

The device for adjusting refresh rate provided by the present invention may solve the problem that a screen has a higher power consumption due to a higher refresh rate set for it according to the dynamic frame rate technology when the screen displays a static image, and achieve the effect of saving power consumption, by detecting whether the image currently displayed on the screen is a static image, and reducing the current first refresh rate of the screen to a second refresh rate based on backlight intensity when the image currently displayed on the screen is a static image, to reduce the refresh rate of the screen when a static image is displayed, wherein the second refresh rate is lower than the first refresh rate and the third refresh rate which is a refresh rate obtained by adjusting the refresh rate of the screen based on dynamic frame rate technology,. In addition, due to the backlight intensity is related with the dimming speed of the screen, so the second refresh rate determined based on the backlight intensity wouldn't cause screen flicker, which may solve the problem of screen flicker due to the second refresh rate not suitable for the current backlight intensity of the screen when a same refresh rate is set for the screen with different backlight intensities.

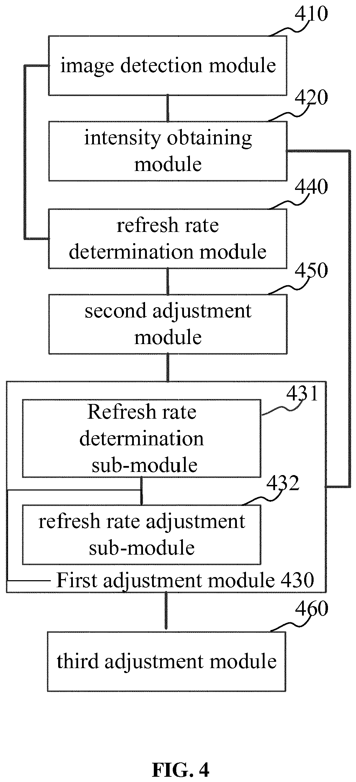

Fig. 4 is a block diagram illustrating a device for adjusting refresh rate according to an exemplary embodiment. The device for adjusting refresh rate may be applied to a terminal, as shown in Fig. 4, the device may include: an image detection module 410, an intensity obtaining module 420, and a first adjustment module 430.

The image detection module 410 is configured to detect whether an image currently displayed on a screen is a static image which remains unchanged during a predetermined period of time.

The intensity obtaining module 420 is configured to obtain backlight intensity of the screen when a detection result of the image detection module 410 is that the image currently displayed on the screen is the static image.

The first adjustment module 430 is configured to reduce a current first refresh rate of the screen to a second refresh rate based on the backlight intensity obtained by the intensity obtaining module 420, the second refresh rate is lower than a third refresh rate obtained by adjusting the refresh rate of the screen based on dynamic frame rate technology.

Advantageously, the first adjustment module 430 includes: a refresh rate determination sub-module 431 and a refresh rate adjustment sub-module 432.

The refresh rate determination sub-module 431 is configured to determine the second refresh rate corresponding to the backlight intensity, wherein the second refresh rate is positively correlated with the backlight intensity.

The refresh rate adjustment sub-module 432 is configured to reduce the current first refresh rate of the screen to the second refresh rate determined by the refresh rate determination sub-module 431.

Advantageously, the refresh rate determination sub-module 431 is further configured to: look up a backlight current corresponding to the backlight intensity in a first correspondence used to record a relationship between different backlight intensities and different backlight currents; and look up the second refresh rate corresponding to the backlight current in a second correspondence used to record a relationship between different backlight currents and different second refresh rates.

Advantageously, the refresh rate adjustment sub-module 432 is further configured to: determine a first transmission rate based on the second refresh rate and adjusting a current second transmission rate to the first transmission rate, wherein the first transmission rate is a data transmission rate of the static image and is lower than the second transmission rate; or transmit data with the current second transmission rate, the data comprises at least two sets of valid data between which at least one set of invalid data is inserted, the valid data is data of the static image, and the invalid data is not displayed on the screen; wherein the second transmission rate corresponds to the first refresh rate.

Advantageously, the third refresh rate is the first refresh rate, the device further comprises: a refresh rate determination module 440 and a second adjustment module 450.

The refresh rate determination module 440 is configured to determine the first refresh rate corresponding to the static image based on the dynamic frame rate technology when the image currently displayed on the screen is the static image.

The second adjustment module 450 is configured to reduce a current fourth refresh rate of the screen to the first refresh rate determined by the refresh rate determination module 440.

Advantageously, the device further includes a third adjustment module 460.

The third adjustment module 460 is configured to increase the second refresh rate to the fourth refresh rate when the image currently displayed on the screen is changed.

The device for adjusting refresh rate provided by the present invention may solve the problem that the screen has a higher power consumption due to a higher refresh rate set for it according to the dynamic frame rate technology when the screen displays a static image, and achieve the effect of saving power consumption, by detecting whether the image currently displayed on the screen is a static image, and reducing the current first refresh rate of the screen to a second refresh rate based on backlight intensity when the image currently displayed on the screen is a static image, to reduce the refresh rate of the screen when a static image is displayed, wherein the second refresh rate is lower than the first refresh rate and the third refresh rate which is a refresh rate obtained by adjusting the refresh rate of the screen based on dynamic frame rate technology,. In addition, due to the backlight intensity is related with the dimming speed of the screen, so the second refresh rate determined based on the backlight intensity wouldn't cause screen flicker, which may solve the problem of screen flicker due to the second refresh rate not suitable for the current backlight intensity of the screen when a same refresh rate is set for the screen with different backlight intensities.

When the image currently displayed by the terminal is changed, by increasing the second refresh rate to the fourth refresh rate, the invention may solve the following problem and improve the display effect of the screen: when the second refresh rate is used to display a varying image and the refresh rate is lower than the change rate of the image, the screen cannot display the whole image which causes incomplete display of the image.

With respect to the device in the above embodiments, specific implementation of the operation performed by each of the modules of the device in the above embodiments has been described in the related method embodiments, which will not be repeated herein.

The present invention provides a device for adjusting refresh rate according to an exemplary embodiment, which may implement the method for adjusting refresh rate provided by the present invention, the device for adjusting refresh rate may include: a processor; and a memory for storing instructions executable by the processor; wherein the processor is configured to: detect whether an image currently displayed on a screen is a static image which remains unchanged during a predetermined period of time; obtain backlight intensity of the screen when the image currently displayed on the screen is the static image; and reduce a current first refresh rate of the screen to a second refresh rate based on the backlight intensity, the second refresh rate is lower than a third refresh rate obtained by adjusting the refresh rate of the screen based on dynamic frame rate technology.

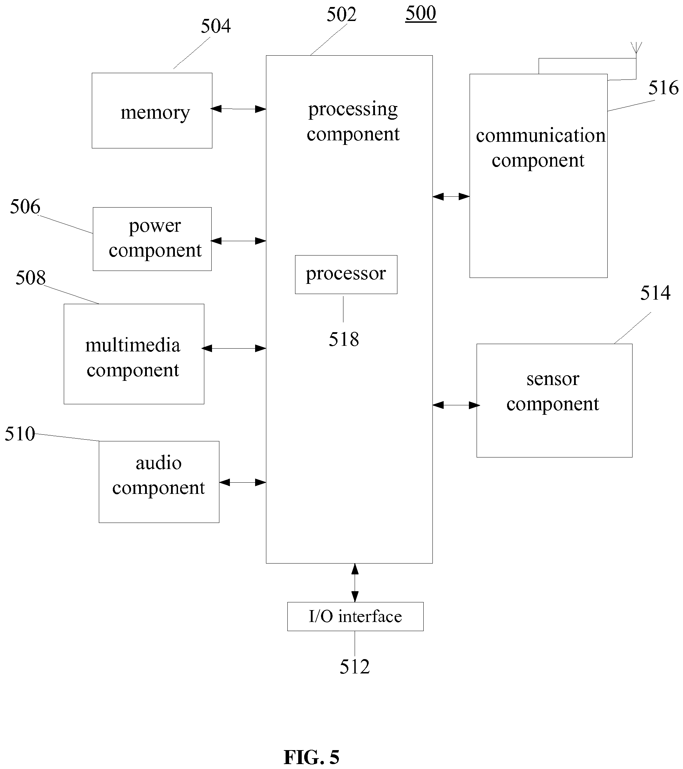

Fig. 5 is a block diagram illustrating a device 500 for adjusting a refresh rate according to an exemplary embodiment. For example, the device 500 may be a mobile phone, a computer, a digital broadcast terminal, a message transceiver, a game console, a tablet device, a medical equipment, a fitness equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data may include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500.

The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a distance sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 504 including instructions executable by the processor 518 in the device 500 to perform the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. The specification and embodiments are merely considered to be exemplary and the substantive scope of the invention is limited only by the appended claims.

It should be understood that the invention is not limited to the precise structure as described above and shown in the figures, but can have various modification and alternations without departing from the scope of the invention. The scope of the invention is limited only by the appended claims.

## Claims

1. A method for adjusting refresh rate, **characterized by** comprising:
detecting (101, 201) whether an image currently displayed on a screen is a static image which remains unchanged during a predetermined period of time;
obtaining (102, 202) backlight intensity of the screen when the image currently displayed on the screen is the static image; and
reducing (103) a current first refresh rate of the screen to a second refresh rate based on the backlight intensity, the second refresh rate is lower than a third refresh rate obtained by adjusting the refresh rate of the screen based on dynamic frame rate technology.

2. The method of claim 1, wherein reducing (103) the current first refresh rate of the screen to the second refresh rate based on the backlight intensity comprises:
determining (203) the second refresh rate corresponding to the backlight intensity, wherein the second refresh rate is positively correlated with the backlight intensity; and
reducing (204) the current first refresh rate of the screen to the second refresh rate.

3. The method of claim 2, wherein determining (203) the second refresh rate corresponding to the backlight intensity comprises:
looking up a backlight current corresponding to the backlight intensity in a first correspondence used to record a relationship between different backlight intensities and different backlight currents; and
looking up the second refresh rate corresponding to the backlight current in a second correspondence used to record a relationship between different backlight currents and different second refresh rates.

4. The method of claim 2 or 3, wherein reducing (204) the current first refresh rate of the screen to the second refresh rate comprises:
determining a first transmission rate based on the second refresh rate and adjusting a current second transmission rate to the first transmission rate, wherein the first transmission rate is a data transmission rate of the static image and is lower than the second transmission rate; or
transmitting data with the current second transmission rate, the data comprises at least two sets of valid data between which at least one set of invalid data is inserted, the valid data is data of the static image and the invalid data is not displayed on the screen;
wherein the second transmission rate corresponds to the first refresh rate.

5. The method of any of claims 1 to 4, wherein the third refresh rate is the first refresh rate, the method further comprises:
determining the first refresh rate corresponding to the static image based on the dynamic frame rate technology when the image currently displayed on the screen is the static image; and
reducing a current fourth refresh rate of the screen to the first refresh rate.

6. The method of claim 5, comprising:
increasing (205) the second refresh rate to the fourth refresh rate when the image currently displayed on the screen is changed.

7. A device for adjusting refresh rate, **characterized by** comprising:
an image detection module (310, 410) configured to detect whether an image currently displayed on a screen is a static image which remains unchanged during a predetermined period of time;
an intensity obtaining module (320, 420) configured to obtain backlight intensity of the screen when a detection result of the image detection module (310, 410) is that the image currently displayed on the screen is the static image; and
a first adjustment module (330, 430) configured to reduce a current first refresh rate of the screen to a second refresh rate based on the backlight intensity obtained by the intensity obtaining module (320, 420), the second refresh rate is lower than a third refresh rate obtained by adjusting the refresh rate of the screen based on dynamic frame rate technology.

8. The device of the claim 7, wherein the first adjustment module (330, 430) comprises:
a refresh rate determination sub-module (431) configured to determine the second refresh rate corresponding to the backlight intensity, wherein the second refresh rate is positively correlated with the backlight intensity; and
a refresh rate adjustment sub-module (432) configured to reduce the current first refresh rate of the screen to the second refresh rate determined by the refresh rate determination sub-module (431).

9. The method of claim 8, wherein the refresh rate determination sub-module (431) is further configured to:
look up a backlight current corresponding to the backlight intensity in a first correspondence used to record a relationship between different backlight intensities and different backlight currents; and
look up the second refresh rate corresponding to the backlight current in a second correspondence used to record a relationship between different backlight currents and different second refresh rates.

10. The device of claim 8 or 9, wherein the refresh rate adjustment sub-module (432) is further configured to:
determine a first transmission rate based on the second refresh rate and adjusting a current second transmission rate to the first transmission rate, wherein the first transmission rate is a data transmission rate of the static image and is lower than the second transmission rate; or
transmit data with the current second transmission rate, the data comprises at least two sets of valid data between which at least one set of invalid data is inserted, the valid data is data of the static image, and the invalid data is not displayed on the screen;
wherein the second transmission rate corresponds to the first refresh rate.

11. The device of any one of claims 7-10, wherein the third refresh rate is the first refresh rate, the device further comprises:
a refresh rate determination module (440) configured to determine the first refresh rate corresponding to the static image based on the dynamic frame rate technology when the image currently displayed on the screen is the static image; and
a second adjustment module (450) configured to reduce a current fourth refresh rate of the screen to the first refresh rate determined by the refresh rate determination module (440).

12. The device of claim 11, further comprising:
a third adjustment module (460) configured to increase the second refresh rate to the fourth refresh rate when the image currently displayed on the screen is changed.

13. A device for adjusting refresh rate, **characterized by** comprising:
a processor (518); and
a memory for storing instructions executable by the processor (518);
wherein the processor is configured to perform a method according to any one of claims 1-6.

14. A computer program including instructions for executing the steps of a method for adjusting refresh rate according to any one of claims 1 to 6 when said program is executed by a computer.

15. A recording medium readable by a computer and having recorded thereon a computer program according to claim 14.
